Europäisches Patentamt

European Patent Office

Office européen des brevets

(19)

(11) Publication number: **0 160 407**

**A1**

(12) ## EUROPEAN PATENT APPLICATION

(21) Application number: 85302265.5

(22) Date of filing: 01.04.85

(51) Int. Cl.⁴: **B 60 J 5/00**
**B 25 J 9/00, B 25 J 13/08**

(30) Priority: 27.04.84 GB 8410864

(43) Date of publication of application:
06.11.85 Bulletin 85/45

(84) Designated Contracting States:
DE FR SE

(71) Applicant: HADEN DRYSYS INTERNATIONAL LIMITED
7-12 Tavistock Square
London WC1H 9LZ(GB)

(72) Inventor: Brooks, Robert John
59 Bearton Green
Hitchin Herts SG5 1UL(GB)

(72) Inventor: Marsden, Peter
99B Nibthwaite Road
Harrow Middlesex(GB)

(74) Representative: Needle, Jacqueline et al,
PAGE, WHITE & FARRER 5 Plough Place New Fetter Lane
London EC4A 1HY(GB)

(54) A manipulator and a method for opening and/or closing hinged and/or sliding members supported on bodies.

(57) For example, a boot/bonnet manipulator has a carriage (200) movable longitudinally of a paint spray booth along tracks (202). A support frame (228) on the carriage supports a slide member (230) mounted for movement transversely relative to the tracks. A plate (240) is mounted on the slide (230) by way of a spherical bearing (232) such that any movement out of the horizontal plane can be detected by sensors which can thereby signal an overload condition. A system of pivotally connected arms (244, 250, 260) are connected to a pivot (242) on the plate (240). The arm (260) carries a resiliently mounted finger (262) arranged to engage in a ring (270) on the boot or bonnet to be opened and closed. When the finger is engaged, raising the arms will lift the boot or bonnet. Sensors within the finger arm (260) detect the deflection of the finger against the action of its mounting means as the boot or bonnet is raised and thus signal that the finger (262) is engaged with the ring (270).

EP 0 160 407 A1

./...

FIG. 6

0160407

## A MANIPULATOR AND A METHOD FOR OPENING AND/OR CLOSING HINGED AND/OR SLIDING MEMBERS SUPPORTED ON BODIES

The present invention relates to a manipulator and a method for opening and/or closing hinged and/or sliding members supported on bodies.

In a paint spray booth where car bodies are painted by robots, it is necessary to open the doors, boot and bonnet lids and other hinged and/or sliding members to enable paint to be applied to the frames therefor and into the boot and engine compartments. Conventionally this is done manually by operators. Subsequently the doors and lids are closed and again this is also conventionally done by operators.

Of course, if these tasks could be performed reliably by automatic means there would be no need for operators to enter the booth. Thus, the condition of the air within the paint spray booth could be allowed to deteriorate as compared to that necessary for humans and there would be a consequential saving in the energy required by any air conditioning systems.

According to the present invention there is provided a manipulator for opening and/or closing hinged and/or sliding members comprising engaging means arranged to engage a hinged and/or sliding member, movable support means for the engaging means, and drive and control means for causing movement of the support means and engagement and/or disengagement of said engaging means, and further comprising means for supplying said control means with information as to the condition of said support means and/or of said engaging means.

In an embodiment, said means for supplying information comprises first sensing means for sensing that the engaging means are engaged with the said member.

As the fact that the hinged and/or sliding member, such as a door, boot lid or bonnet lid, has been engaged can be sensed, control means for the system can prevent operation of the painting robots to paint the door frame or the like if no engagement has been sensed. This reduces the risk of damage to the vehicle body, to the painting robot, and/or to the manipulator.

Additionally or alternatively, said drive and control means comprises one or more linear actuating units, and further comprises second sensing means for sensing linear movement of or caused by one or more of the units. The second sensing means may comprise magnetic reed switches and/or proximity switches arranged to be contacted upon said movement. Additionally or alternatively, third sensing means for sensing excessive forces applied to said movable support means may be provided.

It is clearly important that the manipulator not only senses the condition of the support means and of the engaging means but is also able to respond to the condition sensed. Accordingly, said drive and control means are responsive to said sensing means.

In a preferred embodiment, said support means is mounted on a carriage and includes a slide member slidable relative to said carriage. The carriage may be mounted on one or more tracks for movement therealong, with said slide member movable transversely relative to said tracks. Preferably, said carriage supports a drive assembly for moving said carriage along said tracks. Further sensing means may be provided to sense the position of the carriage along said tracks.

In one embodiment, for opening and/or closing hinged and/or sliding members such as doors where the hinge and/or the member extends substantially vertically, said engaging means is supported on an auxiliary slide member mounted for sliding movement relative to said first mentioned slide member. Further, there is provided, a first linear actuating unit operable to move said first slide member, and a second linear actuating unit operable to move said auxiliary slide member. Preferably, said engaging means comprises an engagement member having two blades pivotally mounted on said auxiliary slide member, one end of each blade carrying a projection which is received in a respective guide slot in a further slide member, the two guide slots extending at an acute angle to one another, and wherein said further slide member is mounted on said auxiliary slide member for sliding movement relative thereto, and a third linear actuating unit is operable to move said further slide member and hence move said blades into and out of an engaging position. A probe may be associated with said engagement member and be arranged to be diverted against the action of resilient biasing means upon engagement by said engagement member of a projection on said member.

In another embodiment, for opening and/or closing hinged and/or sliding members such as boot lids where the hinge and/or the member extends substantially horizontally, there is provided a pivot supported by said slide member, and a main arm having one end connected to said pivot and the other end pivotally connected to a second arm, said engaging means being carried by said second arm. The manipulator may further comprise a first linear actuating unit operable to move said main arm about said pivot, and a second linear actuating unit carried by said main arm and operable to pivot said second arm. Preferably, said engaging means comprises a finger resiliently mounted in a finger arm, said finger arm being pivotally connected to said second arm and being movable by way of a third piston and cylinder unit carried by said second arm. Sensors may be mounted within said finger arm and be arranged to detect movement of said finger against the action of its mounting means.

Preferably, said pivot is mounted by way of a spherical bearing, and sensors are provided to detect movement of said pivot. In an embodiment, a plate is mounted on said slide member by way of said spherical bearing to extend in a substantially horizontal plane, and said pivot is supported on said plate, said sensors being arranged to detect movement of said plate out of said horizontal plane.

The present invention also extends to a method of opening and/or closing hinged and/or sliding members supported on bodies, comprising the steps of engaging a hinged and/or sliding member by a manipulator, and moving the manipulator relative to a body supporting said member to open or close the said member.

It will be appreciated that where the said member is slidable within a first plane, relative movement between said manipulator and the body in a plane substantially parallel to said first plane will be effective to open or close the sliding member.

In an embodiment, said body is moving along a predetermined path, and said manipulator is moved in a different direction to that of said body and/or at a different speed to that of said body to cause said relative movement. Preferably, said body and said manipulator move initially at substantially the same speed and in the same direction, and subsequently the speed of the manipulator is varied.

In order to open or close a hinged member it is generally preferred that the manipulator additionally applies a force on said member acting in a different direction to that of the relative movement of said body and manipulator. In most cases, said force acts in a direction substantially at right angles to that of said relative movement.

0160407

Embodiments of the present invention will hereinafter be described, by way of example, with reference to the accompanying drawings, in which:

Figure 1 shows a side elevation of a door manipulator with its arm in the ready position, the manipulator being shown within a paint spray booth,

Figure 2 shows a side elevation of the arm of the door manipulator of Figure 1,

Figure 3 shows a plan view from above of the arm of Figure 2,

Figure 4 shows in side elevation the outline of the arm of Figure 2 showing the sensing means provided,

Figure 5 shows a plan view from above showing the arm in outline and illustrating the sensing means.

Figure 6 shows a side elevation of a boot/bonnet manipulator with its arm extended, the manipulator being shown within a paint spray booth, and

Figure 7 shows a front elevation of the boot/bonnet manipulator of Figure 6.

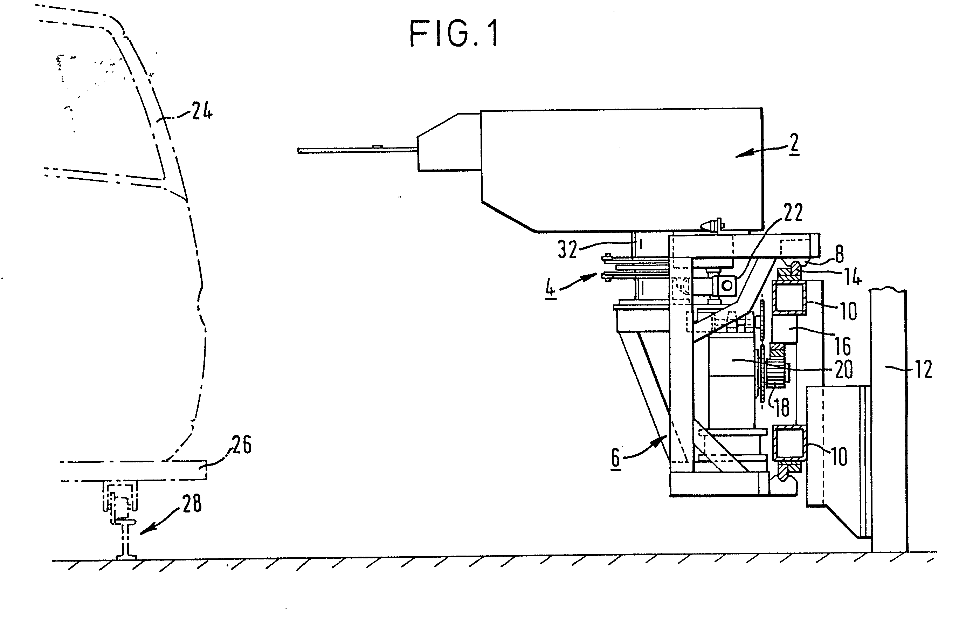

The door manipulator shown in Figures 1 to 5 is illustrated when used in conjunction with a paint spray booth where car bodies are to be painted by robots. In this respect, the door manipulator will be used to open and/or close one or more doors on one side of the body at appropriate times to enable access for the robot(s) at that side of the body.

The door manipulator comprises an arm generally referenced 2 pivotally mounted by means of a column 32 and pivot means 4 on a carriage 6. This carriage has upper and lower elongate roller bearing runners 8 supported for sliding movement relative to tracks 10 which are supported on a structure 12 which extends adjacent a side wall (not shown) of the paint spray booth. The structure 12 may be inside or outside the spray booth. Each of the tracks 10 carries a rail 14 which is engaged by the runners 8.

The tracks 10 extend substantially parallel to one another longitudinally relative to the paint spray booth. An elongate rack 16 is also supported to extend along the structure 12 between the tracks 10. The teeth of the rack 16 are engaged by those of a pinion 18 carried by the carriage 6. This pinion 18 is rotatable by way of a drive unit 20 carried by the carriage 6. In the illustrated embodiment, the drive unit 20 includes an electrical stepper motor. However, a standard electrical motor or an hydraulic motor or other drive means could alternatively be provided.

It will be appreciated that rotation of the pinion 18 by way of the drive unit 20 will cause the carriage 6 to be moved in one direction or the other along the tracks 10 and hence relatove to the structure 12 and to the side wall of the spray booth.

In Figure 1, the arm 2 is shown with its longitudinal axis extending substantially at right angles to the tracks 10. This is the ready position of the arm 2. However, the arm 2 can be pivoted about the pivot means 4 to extend substantially parallel to the tracks 10. This pivoting movement of the arm 2 is effected by retracting or extending a cylinder 22 which may be either pneumatically or hydraulically actuated.

Figure 1 indicates in outline the position of a car body 24 which is to be painted in the spray booth by one or more robots (not shown). This body 24 is supported on a frame 26 which is arranged to run along conveyor tracks 28 extending through the paint spray booth. In known manner, the robot(s) will carry paint spray guns and each is preferably supported on its own carriage. The robot carriages can also be arranged to run along the tracks 10.

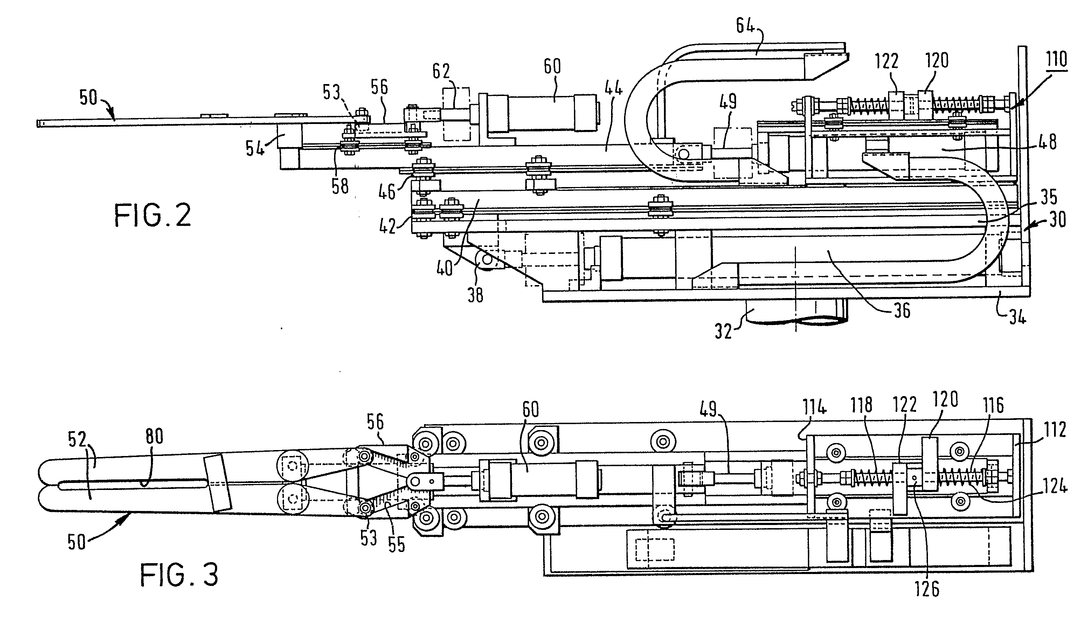

Figures 2 and 3 show a side elevation and a plan view of the arm 2 of the door manipulator from which probes and sensing means have been omitted for clarity. In addition, the external housing of the arm 2 which is shown in outline in Figure 1 has also been omitted.

As can be seen in Figures 2 and 3, the arm 2 comprises a base member 30 which is connected to and carried by the column 32. This base member 30 includes a base plate 34 and an upper plate 35 spaced above and extending substantially parallel to the base plate 34. A first piston and cylinder unit 36 is received between the plates 34 and 35 and supported on the base plate 34. The rod 38 of this cylinder unit 36 is connected to cause movement of a main slide member 40 which is mounted by way of rollers, as 42, for sliding movement relative to the upper plate 35.

An auxiliary slide member 44 is supported by way of rollers, as 46, for sliding movement relative to the main slide member 40. Movement of the auxiliary slide member 44 is effected by way of a second piston and cylinder unit 48 which has a rod 49 connected to the slide member 44.

The auxiliary slide member 44 carries an engagement member 50. This engagement member is formed of two blades 52 which extend longitudinally of the arm 2 adjacent to one another. Each of these blades is pivotally mounted by way of a respective column column 54 onto the auxiliary slide member 44.

The rear end of each blade 52 carries a roller 53 which is engaged in a respective one of a pair of converging guide slots 55 defined in the upper surface of a further slide 56. This further slide 56 is mounted by way of rollers, as 58, for sliding movement along the auxiliary slide member 44. Movement of the slide 56 is effected by way of a further piston and cylinder unit 60 having a piston rod 62 pivotally connected to the slide 56. It will be seen that when the rod 62 is extended the blades 52 of the engagement member 50 will be moved apart whereas when the rod 62 is retracted the blades 52 will be brought together to the closed position shown in Figure 3. The blades 52 are shaped to define a recess 80 therebetween when the blades are in their closed position.

In an alternative embodiment (not illustrated) the engagement member 50 comprises truncated blade members which are pivotally mounted at column 54 to said auxiliary slide member 44 and carry the rollers 53. A respective blade is removably attached to each blade member. In this embodiment, blades of different sizes and shapes can be mounted on said blade members such that the size and shape of said engagement member can be varied.

Figure 2 also shows the articulated track 64 which is provided to house the necessary supply lines for the arm 2. In this respect, in the illustrated embodiment movement of the components of the arm is effected by piston and cylinder units which may be pneumatically or hydraulically actuated. However, other linear actuating units such as electric linear actuators may be employed. It is preferred that each of the actuating units should have an adjustable stroke.

The door manipulator is actuated by electronic control means (not shown), for example, including a microprocessor. Thus, the drive means 20 is actuated to move the carriage and hence the door manipulator relative to the side wall of the spray booth and the cylinder units 22, 36, 48 and 60 are actuated to swivel the arm 2 relative to the carriage 6 and to reciprocate the slide members longitudinally of the arm 2. As the control means are not a part of the present invention they will not be further described herein but one possible sequence of operation will be briefly described.

The door manipulator will have a rest position in which its carriage 6 is at a particular location relative to the side wall of the spray booth, and in which the longitudinal extent of the arm 2 extends substantially parallel to the side wall. In this end position a part of the carriage 6 will be in the inductive field of a proximity switch (not shown) such that the electronic control means can confirm that the carriage is in the rest position.

As the car body 24 is advanced by way of the conveyor 28 into the paint spray booth, the drive unit 20 of the door manipulator is actuated to move the carriage 6 out of its rest position and to move the door manipulator towards the car body 24. The cylinder unit 22 is also actuated such that the arm 2 is pivoted through 90° such that it is in the position shown in Figure 1 in which it extends substantially at right angles to the side wall of the booth. The cylinder unit 60 is also be actuated to open the blades 52 of the gripper member 50.

Means are provided to signal to the control means when the door manipulator and the car body 24 are in their aligned position in which the engagement member 50 is aligned with a peg (not shown) provided in the or a door of the car body. When the engagement member and the peg are so aligned the first cylinder unit 36 is actuated to extend its rod 38 such that the main slide member 40 and hence the member 50 are advanced forwardly. The opened blades 52 of the member 50 thus extend on either side of the peg
in the body door. The cylinder unit 60 is then retracted to
close the blades 52 such that the peg is engaged between the
blades.

In this example, the movement of the car body through the paint
spray booth will not be interrupted and at this time it is
preferred that the drive unit 20 be actuated to move the door
manipulator at substantially the same speed and in the same
direction as the movement of the car body through the booth.

Once the engagement member 50 is engaged with the peg in the
door, the first cylinder 36 is retracted to retract the main
slide member 40 and the member 50. Thus, a force substantially
at right angles to the plane of the door of the body 24 is
applied to the door which is thereby opened. Additionally, the
speed of travel of the door manipulator relative to that of the
body can be adjusted to ensure that the door is fully opened. In
this respect, it will be appreciated that the arm 2 can pivot
relative to the carriage 6 to accommodate the opening movement of
the door.

The robot in the paint spray booth would be programmed to
complete its painting operation on the inside of the door whilst
the door is in its open position. During this painting
operation, the engagement member 50 can be maintained in
engagement with the door peg and the carriage 6 can be moved at
substantially the same speed as the body such that the door is
held open and maintained in substantially the same position
relative to the car body.

At the end of this painting operation it will generally be
required to close the door and to do this relative movement of
the door manipulator in the opposite direction to the car body is initiated. This relative movement can be achieved either by moving the door manipulator in the opposite direction to the movement of the body or by stopping movement of the door manipulator as the car body continues to advance through the booth. Once the door manipulator has reached the aligned position, in which the arm 2 extends at right angles to the side wall of the booth and is aligned with the peg in the door, the closing operation is continued by extending the main slide member 40 by way of the cylinder unit 36. This substantially closes the door. However, a final push to ensure that the door is fully closed can be given by extending the rod 49 of the cylinder unit 48 a short distance such that the auxiliary slide member 44 is moved forward a correspondingly short distance. It is then only necessary to extend the cylinder unit 60 to open the engagement member and to retract the main slide member 40. The door manipulator will then be returned to its rest position with the arm 2 swivelled back into its position parallel to the tracks 10.

In the example described above, the car body continues to move through the spray booth during the opening and/or closing sequences for the door. Of course, the car body can be stationary during these sequences if required.

The door manipulator has also been described above as performing a sequency of operations on the door, namely, opening the door, holding the door open, and subsequently closing the door. If required, the door manipulator can be arranged to perform just one or two of these operations.

In the foregoing, the cylinder unit 48 and the auxiliary slide member 44 are only used to apply a small push to the door of the car body to ensure that it is completely closed. However, the cylinder unit 48 also enables the arm 2 to be adjusted to open and/or close doors of varying sizes and to open and/or close doors

- 12 -

0160407

on car bodies which are spaced at varying distances from the structure 12 adjacent the side wall 12 of the booth. Thus, in the embodiment shown in Figure 2, the auxiliary slide member 44 is shown in its fully retracted position with the rod 49 at its shortest extent. If the arm 2 is to be used to open the door of a car body which is spaced sufficiently far from the structure 12 that extension of the main slide member 40 alone will not enable the engagement member 50 to reach the door peg, the cylinder unit 48 is used. Thus, throughout the door opening operation the cylinder unit 48 will be extended a predetermined extent such that the auxiliary slide member 44 and hence the member 50 is extended. The door opening sequence will then be as previously, further operation of the cylinder unit 48 not being required. However, some further extension of the cylinder unit 48 to finally close the door at the end of the sequence will be provided.

Additionally and/or alternatively the stroke of the cylinder unit 36 can be adjustable and programmable to enable the manipulator to deal with doors and car bodies which vary in size.

The door manipulator is provided with sensing means, which are not shown in Figures 2 and 3, and which are used to signal to the electronic control means the status of the operation. The sensing means also provide protection against overloads, excessive forces and the like. Thus, as already mentioned, when the carriage 6 is in the rest position it will influence a proximity switch. Similarly, a second end position of the carriage spaced along the tracks 10 from the rest position can be marked by way of a further proximity switch and can be used to prevent any collision between the door manipulator and the painting robot which also runs along the tracks 10.

Proximity switches or other sensing means (not shown) are provided such that the position of the arm 2 relative to the carriage 6 can be determined.

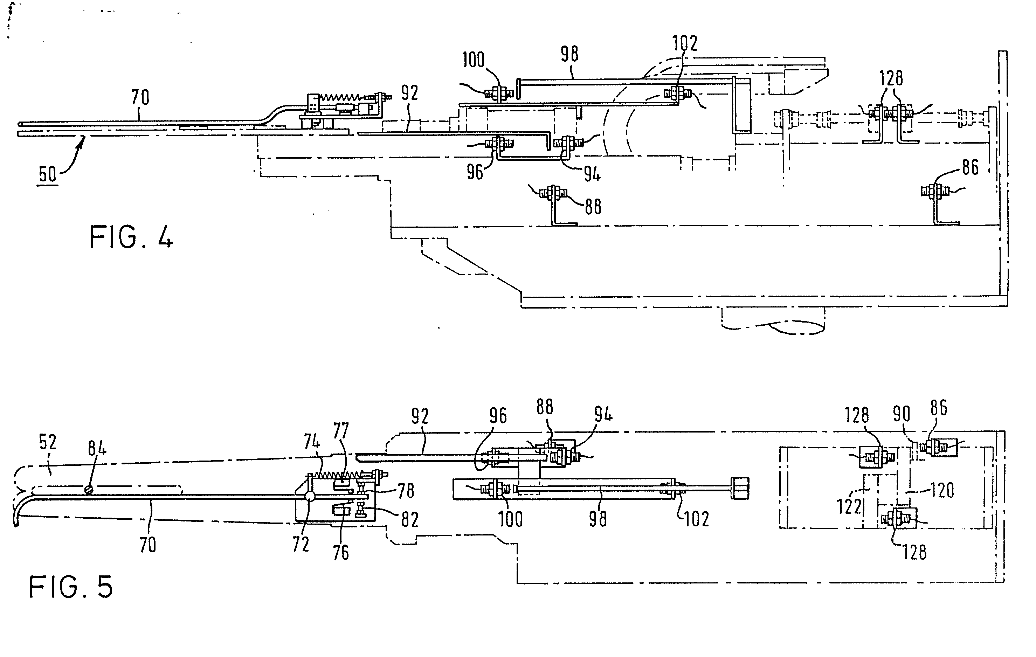

Figures 4 and 5 show sensing means carried by the arm 2. In the embodiment illustrated these sensing means are in the form of mechanical proximity switches but, of course, other sensors can be provided if preferred. For example, each of the cylinder units could be fitted with magnetic reed switches arranged to sense the ends of the stroke.

In Figures 4 and 5 it will be seen that a elongate probe 70 is pivotally mounted at 72 on the engagement member 50. In its rest position the probe 70 is positioned by a tension spring 74 and by adjusting set screws 78 and 82 at its inner end such that it actuates a limit switch 76. In this position, which is not shown in Figure 5, the probe 70 extends substantially longitudinally of the member 50 and of the recess 80 defined by the two blades 52.

The position of the probe 70 shown in Figure 5 is that which is assumed when a door peg, as indicated at 84, has been correctly received within the blades 52. As the blades 52 close around the door peg 84 the probe 70 is displaced against the action of the spring 74 such that it actuates a further limit switch 77.

The arm 2 also has a number of proximity switches which sense if the cylinder units have been extended or retracted to their fullest extent. Thus, the main slide member 40 carries a fixed bracket 90 which in the fully retracted position of the main slide member 40 will enter the inductive field of a proximity switch 86 and in the fully extended position of the main slide member 40 influences the proximity switch 88. Similarly, the slide 56 or a part of the gripper member 50 carries a bracket 92 which is arranged in the fully retracted position of the cylinder unit 60 to influence a proximity switch 94 and in the fully extended position thereof to influence a proximity switch 96.

Likewise, the piston rod 49 of the second cylinder unit 48 carries a bracket 98 arranged to influence a proximity switch 100 in the fully extended position and a proximity switch 102 in the fully retracted position of the rod 49.

Thus, the electronic control means can be programmed to demand that selected cylinder units are fully extended or fully retracted as appropriate before a further control step can be initiated.

The main slide member 40 carries a fixed bracket member 110 having a rear wall 112 and a front wall 114. A respective rod 116 and 118 extends longitudinally of the bracket member 110 from each of the front and rear walls and carries a respective metal block 120 and 122. Each of the blocks is biased by way of a spring 124 to contact a central post 126. In this rest position of the blocks 120 and 122, which is shown in Figure 3, each block is spaced from a respective proximity switch 128. However, if excessive forces are applied to the arm 2 one of the proximity switches 128 will be influenced by the respective metal block.

Thus, let us assume that the engagement member 50 of the door manipulator is engaged with a door peg but that as the main slide member 40 is retracted the door of the car body will not open. This will apply a force to the arm tending to extend the main slide member such that the block 120 will be pulled to influence its proximity switch 128. This condition can be used as an alarm condition such that the member 50 is immediately opened to release the door peg. Similarly, if for some reason the car door as it opens applies a force on the arm 2 tending to push the slide member 40 to its retracted position this will push the block 122 into the field of its proximity switch 128 and again this can be treated as an alarm condition and operation of the door manipulator can cease. If required, audible and/or visible alarm indications can also be given.

The manipulator is described above when used to open and/or close doors of car bodies travelling through a paint spray booth. Of course, both of the manipulators described herein can be used to open and/or close other hinged and/or sliding members of vehicle or other bodies. Thus, the manipulators could be used to open and/or close petrol cap covers on vehicle bodies or to open and/or close doors on refrigerators and the like. Of course, the invention can be used in environments other than paint spray booths, and as the bodies can be stationary during an opening or closing sequence, the bodies need not be supported by conveyor means.

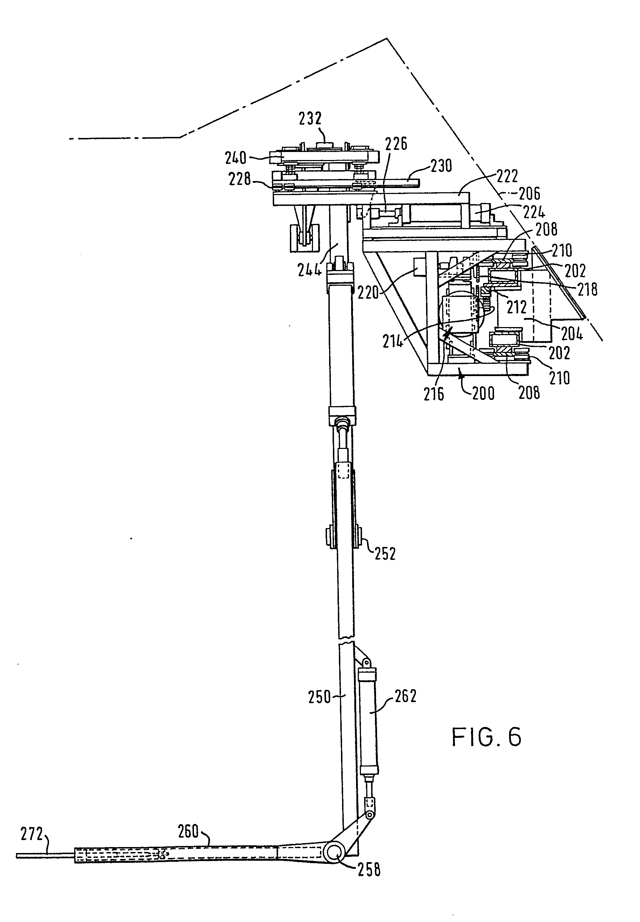

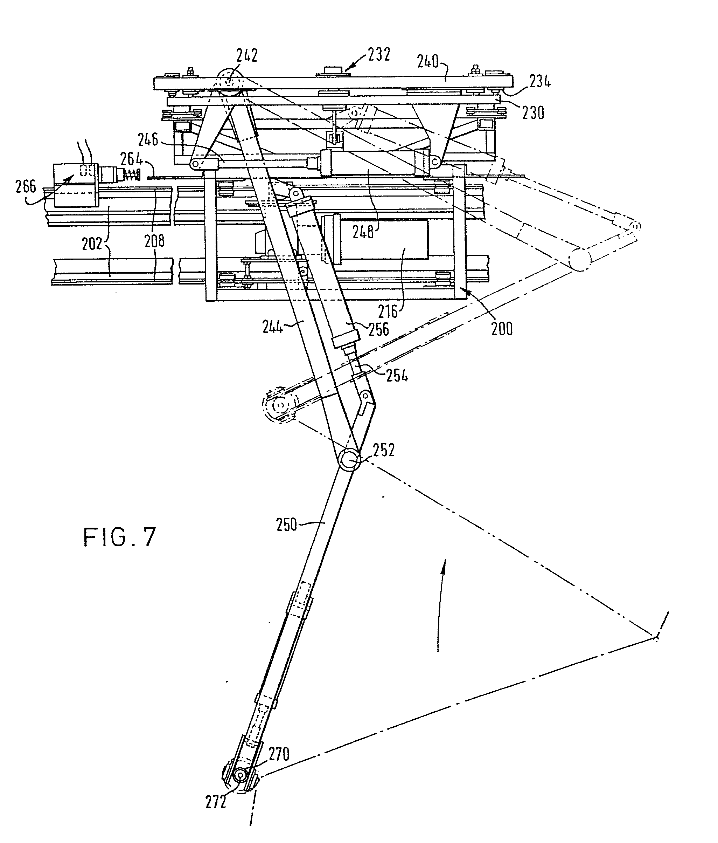

The manipulator shown in Figures 1 to 5 is suitable for opening and/or closing members which extend and/or whose hinge extends in a substantially vertical plane. However, this manipulator is not suitable where the hinged and/or sliding member and/or its hinge extends in a substantially horizontal plane. In this case, the manipulator shown in Figures 6 and 7, which is referred to for simplicity as a boot manipulator, can be used.

The boot manipulator shown in Figures 6 and 7 is also illustrated as used in conjunction with a paint spray booth in which car bodies are painted by robots and would be used to open and/or close the horizontally hinged or extending members of the body, such as the boot and bonnet lids, at appropriate times to enable access for the painting robots.

The boot manipulator has a carriage 200 which is supported for sliding movement along a pair of substantially parallel longitudinal tracks 202 which extend longitudinally of the paint spray booth supported upon a track support member 204. In the embodiment illustrated, the track support member 204 is mounted on a roof structure 206 of the paint spray booth. Of course, the track support member 204 could alternatively be fixed to an independent structure within or outside of the paint spray booth.

Each of the tracks 202 carries a rail 208 which is engaged by a respective pair of roller bearing runners 210 carried by the carriage 200.

An elongate rack 212 is also supported by the track support 204 to extend longitudinally of the paint spray booth. The teeth of the rack 212 are engaged by those of a pinion 214 carried by the carriage 200. This pinion 214 is rotatable by way of a geared drive assembly 216 carried by the carriage 200. This drive assembly 216 includes an electrical stepper motor, a standard electrical motor, an hydraulic motor, or other suitable drive means.

It will be appreciated that rotation of the pinion 214 by way of the drive assembly 216 will cause the carriage 200 to be moved in one direction or the other along the tracks 202 and hence longitudinally of the paint spray booth.

The drive assembly 216 is also arranged to rotate a chain or belt drive indicated at 218 which is rotationally fixed to the pinion 214. This chain drive 218 is connected to an encoder 220 which outputs pulses which indicate the direction of the rotation of the pinion 214. The encoder 220 thus provides information as to the position of the boot manipulator along the tracks 202.

A support frame 222 is fixed to the carriage 200 and supports a first piston and cylinder unit 224. The rod 226 of this unit 224 is connected to cause movement of a main slide member 230 which is mounted by way of rollers as 228 for sliding movement relative to the support frame 222. It will be seen that the main slide member 230 is movable transversely relative to the longitudinal tracks 202 and hence of the spray booth.

A plate 240 is carried on the main slide member 230 to extend in a substantially horizontal plane by way of a spherical bearing 232. At each corner the plate is supported by pre-loaded disc springs 234 such that the plate 240 can be deflected in any horizontal plane. The plate 240 thus acts as a gimbal. Sensors, such as proximity switches (not shown) are preferably provided to signal when the plate 240 is deflected out of the horizontal plane.

The plate 240 carries a pivot 242 to which a main arm 244 is fixed. The pivot 242 is also connected to the piston rod 246 of a piston and cylinder unit 248 which is supported by the main slide member 230. Normally, the main arm 244 is in the home position illustrated in dash dot lines in Figure 7 with the rod 246 retracted. It will be appreciated that extension of the rod 246 will move the main arm to the extended position shown in Figure 7.

The free end of the main arm 244 is pivotally connected at a pivot 252 to a second arm 250. As can be seen in Figure 7, one end of this second arm 250 is connected to the piston rod 254 of a piston and cylinder unit 256 which is supported by the main arm 244. This unit 256 controls movement of the second arm 250. In the home position of the second arm indicated in dash dot lines in Figure 7, the rod 254 is extended such that the main arm 244 and the second arm 250 define an acute angle and the arm arrangement is retracted. Operation of the cylinder unit 256 to retract its rod 254 extends the second arm 250 relative to the main arm 244.

At its lowest end the second arm 250 carries a pivot point 258 to which a finger arm 260 is connected. In its home position, this finger arm 260 will generally extend substantially parallel to the second arm 250. However, it can be extended by way of a piston and cylinder unit 262 to extend substantially at right angles to the second arm 250. It will be seen that the cylinder 262 unit is carried by the second arm 250.

At its free end the finger arm 260 carries an elongate finger 272. In this respect, the finger arm 260 is hollow as indicated in Figure 6 and the finger 272 extends therein. The finger is resiliently mounted within the arm 260 for universal movement and around its inner end an annular sensor or at least four diametrically disposed sensors (not shown) are mounted such that movement of the finger 262 in any radial direction can be detected. Similarly, sensors (not shown) can be mounted in the finger arm 260 to sense if the finger is pushed inwardly or pulled outwardly thereof.

For simplicity, the supply lines to the boot manipulator are not shown in Figures 6 and 7. However, it will be appreciated that power and control signals will be fed to the drive assembly 216 and to each of the cylinder units. In the embodiment illustrated, movement of the arms of the manipulator is effected by cylinder units 224, 248, 256 and 262 which may be pneumatically or hydraulically actuated. However, other linear actuating units such as electric linear actuators may be employed. It is preferred that each of the actuating units should have an adjustable stroke.

The boot manipulator is actuated by electronic control means (not shown), for example, including a microprocessor. Thus, the drive assembly 216 is actuated to move the carriage 200 and hence the boot manipulator longitudinally of the spray booth and the main slide member 230 is moved transversely to position the arms. The cylinder units 248, 256, and 262 are actuated to pivot the arms to bring the finger 272 to the position required. As the control means are not a part of the present invention they will not be further described herein but a possible sequence of operation will be briefly described.

The boot manipulator has a home position in which the arms are retracted as described above and in which the carriage 200 is at a particular longitudinal location within the spray booth. In this end position a bracket 264 carried by the carriage 200 will be within the inductive field of a proximity switch 266 (Figure 7) such that the electronic control means can confirm that the carriage is in the rest position.

As the car body is advanced by way of its conveyor into the paint spray booth, the drive assembly 216 of the boot manipulator is actuated to move the carriage 200 out of its rest position to a position in which the arms are substantially aligned with a ring 270 or other suitable engaging means attached to the boot lid of the car body. In this respect, the encoder 220 can be used to signal to the control means that the boot manipulator and the car body are in their aligned position and the control means will then move the carriage 200 at a synchronous speed and in the same direction as the car body. The cylinder unit 248 is then actuated to extend the piston rod 246 such that the main arm 244 is moved downwardly from its home position to the extended position shown in Figure 7. Simultaneously or subsequently the cylinder unit 256 is actuated to extend the second arm 250. Simultaneously or subsequently the finger arm 260 is moved to extend substantially horizontally by way of the cylinder unit 262. In this position the finger 272 should be aligned with the boot ring 270.

The first cylinder unit 224 is then actuated to extend its piston rod 226 such that the main slide member 230 is moved transversely outwardly of the carriage 200. This transverse movement of the slide member 230 moves the plate 240 and the arms transversely outwardly such that the finger 272 enters the boot ring 270.

The cylinder unit 248 is then retracted to lift the main arm 244 back to its home position. The pivot point 252 is thus moved along the arc of a circle and similarly the finger 272 is lifted along the arc of a circle. This lifting movement is effective to raise and open the boot lid. The second arm 250 can pivot to accommodate the opening movement of the boot lid if required.

The robots in the paint spray booth would be programmed to complete the painting operation within the boot compartment whilst the boot lid is maintained in the open position. During this painting operation the carriage 200 will continue to move at substantially the same speed as the car body such that the position of the boot lid remains the same.

At the end of the painting operation it will generally be required to close the boot lid and this can simply be done by extending the cylinder rod 246 of the cylinder unit 248 to pivot the main arm 244 to its extended position and thus close the boot lid.

The weight of the boot lid will generally ensure that the boot is closed. It is then only necessary to retract the cylinder unit 224 to move the main slide member 230 towards the side wall of the booth so that the finger 272 is moved out of the boot ring 270. Generally, the finger arm 260 will then be pivoted back to its position substantially parallel with the second arm 250 and the second arm 250 and the main arm 244 will be retracted into their home position. The carriage 200 will then be returned to its rest position.

The boot manipulator is provided with sensing means, some of which can be seen in Figures 6 and 7, which are used to signal to the electronic control means the status of the operation. The sensing means also provide protection against overloads, excessive forces and the like. Thus, as already mentioned, when the carriage 200 is in its rest position it contacts a proximity switch 266. Similarly, a second end position of the carriage 200 spaced along the tracks 202 from the rest position can be marked by way of a further proximity switch.

As described above, a longitudinal or radial movement of the finger 272 can be sensed by the sensors in the finger arm 260. This information is used to signal that the finger is correctly within the boot ring 270 and that the boot lid has been lifted. Thus, if the finger strikes the periphery of the boot ring instead of entering therein it will be moved longitudinally and this movement will be sensed. When the boot lid is lifted the boot ring will deflect the finger downwardly and this deflection confirms that the boot is being lifted. Of course, if this deflection is not signalled the operation can be terminated.

Each of the cylinder units preferably contains at least a pair of magnetic reed switches such that signals confirming that the cylinders have been extended or retracted to their fullest extent can be provided. Additionally or alternatively, magnetic reed switches can be used to signal the proportion of the stroke assumed by each cylinder unit. The electronic control means can be programmed to demand that selected cylinder units are fully extended, fully retracted, or have a predetermined stroke compression as appropriate before a further control step can be initiated.

The gimbal arrangement provided by the plate 240 provides general collision and overload protection for the boot manipulator.

Thus, any movement of the plate 240 from its horizontal position is signalled and can be used to initiate an alarm. It will be appreciated that the plate 240 will be moved if excessive forces are applied to any of the arms 244, 250, and 260.

In the embodiment described above, the actuator unit 248 and/or the actuator unit 256 can be programmable such that the manipulator is able to cope with different body heights.

In an alternative embodiment (not illustrated) the gimbal arrangement is omitted. The pivot for the main arm is supported by a plate, as 240, and is directly mounted in a spherical bearing. Suitable sensors arranged to detect movement of the pivot are provided such tht the manipulator can be protected against the application of overload forces.

- 23 -                    0160407

CLAIMS:

1. A manipulator for opening and/or closing hinged and/or sliding members comprising engaging means arranged to engage a hinged and/or sliding member, movable support means for the engaging means, and drive and control means for causing movement of the support means and engagement and/or disengagement of said engaging means, and further comprising means for supplying said control means with information as to the condition of said support means and/or of said engaging means.

2. A manipulator as claimed in Claim 1, wherein said means for supplying information comprises first sensing means for sensing that the engaging means are engaged with the said member.

3. A manipulator as claimed in Claim 1 or 2, wherein said drive and control means comprises one or more linear actuating units, and further comprising second sensing means for sensing linear movement of or caused by one or more of the units.

4. A manipulator as claimed in Claim 3, wherein the second sensing means comprises magnetic reed switches.

5. A manipulator as claimed in Claim 3, wherein the second sensing means comprises proximity switches.

6. A manipulator as claimed in any preceding claim, further comprising third sensing means for sensing excessive forces applied to said movable support means.

7. A manipulator as claimed in any preceding claim, further comprising a carriage for said support means, said carriage being arranged to be mounted on one or more tracks for movement therealong and supporting a drive assembly for moving said carriage along said tracks, and wherein said support means includes a slide member slidable relative to said carriage transversely relative to said tracks.

8. A manipulator as claimed in Claim 7, further comprising further sensing means for sensing the position of said carriage along said tracks.

9. A manipulator as claimed in any preceding claim, wherein said engaging means is arranged to engage a projection on said member and comprises an engagement member formed of two blades pivotally connected for movement into and out of an engaging position, and wherein a probe is associated with said engagement member and is arranged to be diverted against the action of resilient biasing means upon engagement of said projection by the engagement member.

10. A manipulator as claimed in any of claims 1 to 8, wherein said engaging means is arranged to cooperate with further engaging means on said member, and comprises a resiliently mounted finger arranged to be diverted against the action of its mounting means upon engagement of said finger by said further engaging means.

11. A manipulator as claimed in Claim 7 or 8, wherein said engaging means is supported on an auxiliary slide member mounted for sliding movement relative to said first mentioned slide member, and further comprising a first linear actuating unit operable to move said first slide member, and a second linear actuating unit operable to move said auxiliary slide member, wherein said engaging means comprises an engagement member having two blades pivotally mounted on said auxiliary slide member, one end of each said blade carrying a projection which is received in a respective guide slot in a further slide member, the two guide slots extending at an acute angle to one another, and wherein

- 25 -

0160407

said further slide member is mounted on said auxiliary slide member for sliding movement relative thereto, and a third linear actuating unit is operable to move said further slide member and hence move the said blades into and out of an engaging position.

12. A manipulator as claimed in Claim 11, wherein a probe is associated with said engagement member and is arranged to be diverted against the action of resilient biasing means upon engagement by the engagement member of a projection on said member.

13. A manipulator as claimed in Claim 7 to 8, further comprising a pivot supported by said slide member, a main arm having one end connected to said pivot and the other end pivotally connected to a second arm, said engaging means being carried by said second arm, a first linear actuating unit operable to move said main arm about said pivot, and a second linear actuating unit carried by said main arm and operable to pivot said second arm.

14. A manipulator as claimed in Claim 13, wherein said engaging means comprises a finger resiliently mounted in a finger arm, said finger arm being pivotally connected to said second arm and being movable by way of a third linear actuating unit carried by said second arm, and wherein sensors are mounted within said finger arm and are arranged to detect movement of said finger against the action of its mounting means.

15. A manipulator as claimed in Claim 13 or 14, wherein said pivot is mounted by way of a spherical bearing, and wherein sensors are provided to detect movement of said pivot.

16. A manipulator as claimed in Claim 15, wherein a plate is mounted on said slide member by way of said spherical bearing to extend in a substantially horizontal plane, and said pivot is supported on said plate, said sensors being arranged to detect movement of said plate out of said horizontal plane.

17. A method of opening and/or closing hinged and/or sliding members supported on bodies, comprising the steps of engaging a hinged and/or sliding member by a manipulator, and moving the manipulator relative to a body supporting said member to open or close the said member.

18. A method as claimed in Claim 17 wherein said body is moving along a predetermined path, and wherein said manipulator is moved in a different direction to that of said body and/or at a different speed to that of said body to cause said relative movement.

19. A method as claimed in Claim 17 wherein said body and said manipulator move initially at substantially the same speed and in the same direction, and subsequently the speed of the manipulator is varied.

20. A method as claimed in any of Claims 17 to 19, wherein the manipulator additionally applies a force on said member acting in a different direction to that of the relative movement of said body and manipulator.

21. A method as claimed in Claim 20, wherein said force acts in a direction substantially at right angles to that of said relative movement.

FIG.1

0160407

FIG.2

FIG.3

FIG. 4

50

70

92

100

98

102

128

96

94

88

86

FIG. 5

52

84

74

77

92

96

88

94

128

90

86

70

72

76

78

82

100

98

102

122

120

128

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y | US-A-4 342 535  (BARTLETT)<br><br>* Column  2, lines 50-54; column 3,  line  64 - column 4, line 43; column  3,  lines  28-34; figures 2,6 *<br><br>--- | 1,2,3,<br>5,17 | B 60 J    5/00<br>B 25 J    9/00<br>B 25 J  13/08 |
| Y | ELECTRO CONF. RECORD, vol. 4, 24th-26th April 1979, pages 1-16; A.K.BEJCZY: "Manipulator control automation using smart sensors"<br>*  Page 1, left-hand column, line 48  - right-hand column, line 21; page  5, right-hand column, lines 31-57; figure 1 *<br><br>--- | 1,2,3,<br>5,17 | |
| Y | US-A-4 342 536  (AKEEL)<br><br>*  Column 2, lines 48-65; figures 2,6 *<br><br>--- | 1,7,8,<br>17 | |
| Y | US-A-3 272 347  (LEMELSON)<br><br>*  Column  4, lines 40-44; column 12·, lines 14-29; figures 2,15 *<br><br>--- | 1,7,8,<br>17 | B 60 J    5<br>B 25 J    9<br>B 25 J  13 |
| A | US-A-4 423 999  (CHOLY)<br><br>*  column  3, lines 46-51; column 4,  line  40 - column 5, line 38; figures 1-3 *<br><br>---            -/- | 1,2,7,<br>17 | |

TECHNICAL FIELDS SEARCHED (Int. Cl.4)

The present search report has been drawn up for all claims

| Place of search | Date of completion of the search | Examiner |
|---|---|---|
| THE HAGUE | 24-06-1985 | AYITER I. |